# EUROPÄISCHE PATENTSCHRIFT

(11) **EP 1 944 195 B1**
(45) Veröffentlichungstag und Bekanntmachung des Hinweises auf die Patenterteilung: **14.12.2011**
(21) Anmeldenummer: 07123249.0
(22) Anmeldetag: 14.12.2007
(51) Int. Cl.: B60Q 1/08

(54) **Verfahren und Vorrichtung zum Ansteuern einer Nahbereich-Ausleuchtungsvorrichtung für ein Fahrerassistenzsystem eines Kraftfahrzeugs**
Method and device for controlling a close up lighting device for a driver assistance system of a motor vehicle
Procédé et dispositif de commande d'un dispositif d'éclairage d'environnement proche pour un système d'assistance du conducteur d'un véhicule automobile

(30) Priorität: 10.01.2007 DE 102007001558
(43) Veröffentlichungstag der Anmeldung: 16.07.2008
(73) Patentinhaber: ROBERT BOSCH GMBH, 70442 Stuttgart (DE)
(72) Erfinder: Heger, Thomas, 66957 Vinningen (DE); Wuerz-Wessel, Alexander, 70599 Stuttgart (DE); Schick, Jens, 71083 Herrenberg (DE)

(56) Entgegenhaltungen:
- WO-A1-03/008232
- WO-A1-2004/013654
- US-A1- 2006 018 513
- US-B1- 6 281 806

## Beschreibung

### STAND DER TECHNIK

Die vorliegende Erfindung betrifft ein Verfahren und eine Vorrichtung zum Steuern einer Nahbereich-Ausleuchtungsvorrichtung für ein Fahrerassistenzsystem eines Kraftfahrzeuges.

Neben Fahrerassistenzsystemen, die den Fahrkomfort verbessern, werden derzeit Fahrerassistenzsysteme mit Funktionen entwickelt, die die Sicherheit des Fahrzeuges und damit die Sicherheit dessen Insassen, aber auch die Sicherheit anderer Verkehrsteilnehmer verbessern. Beispiele dafür sind aktive Fußgängerschutzfunktionen, automatische Notbremsung, Nahsichtunterstützung, ... usw. Aufgrund physikalischer Eigenschaften wird dabei beispielsweise für den Fußgängerschutz auf kamerabasierte, für die automatische Notbremse auf kamera-radargestützte Systeme gebaut.

Die DE 103 48 117 A1 offenbart eine Fahrzeug-Infrarotstrahlungsquelle für ein Infrarot-Nachtsichtsystem. Diese bekannte Infrarotstrahlungsquelle enthält eine LED-Anordnung, welche über eine große Fläche verteilt ist. Insbesondere offenbart diese Druckschrift, die LEDs gruppenweise selektiv anzusteuern bzw. fahrzeugspezifische Situationen durch entsprechende Sensoren zu erfassen und die Informationen zur jeweiligen Situation einer Steuereinrichtung zur Ansteuerung der LEDs zuzuführen.

Fig. 4 zeigt schematisch eine aus der WO 2004/013654 A1 bekannte Vorrichtung zum Steuern einer Nahbereich-Ausleuchtungsvorrichtung für ein Fahrerassistenzsystem eines Kraftfahrzeuges.

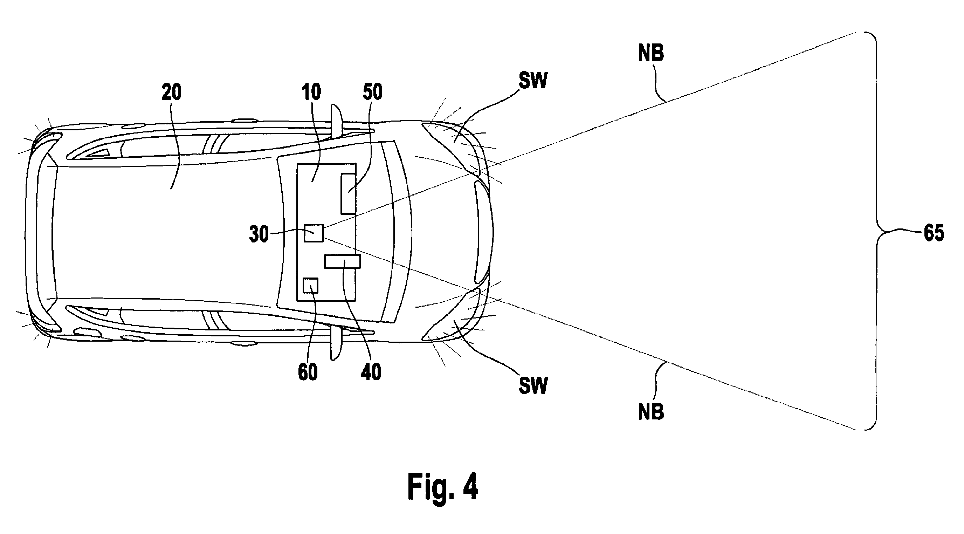

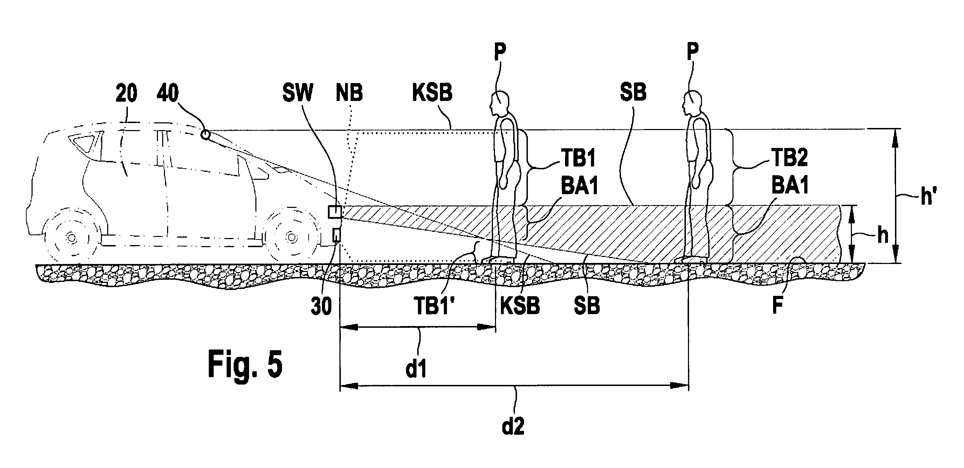

In Figur 4 bezeichnet Bezugszeichen 10 ein Nahbereich-Nachtsichtsystem eines Kraftfahrzeuges 20. Das System 10 enthält eine Lichtquelle 30 im nicht-sichtbaren Wellenlängenbereich, beispielsweise Infrarot-Wellenlängenbereich. Weiterhin enthält das System 10 eine Kamera 40 zum Abbilden von Reflektionen der Strahlung der Lichtquelle 30 im entsprechenden Wellenlängenbereich. Bezugszeichen 60 bezeichnet eine Steuervorrichtung zum Steuern der Kamera 40 und weiterer Systemkomponenten wie z.B. der Lichtquelle 30. Beispielsweise kann die Lichtquelle 30 gepulst sein und die Kamera 40 in entsprechender Weise gepulst sein. Eine Anzeigevorrichtung 50 zum Anzeigen der von der Kamera 40 erstellten Bilder ist ebenfalls vorgesehen, beispielsweise in Form eines Head-Up-Displays (HUD). Insbesondere offenbart die WO 2004/013654 A1, eine Pulsbreite der Lichtquelle an eine Tiefe eines abzubildenden Bereichs anzupassen. Bezugszeichen 65 bezeichnet den Nahausleuchtungsbereich der Lichtquelle 30, welcher im vorliegenden Schnitt durch die Linien NB begrenzt und derart gestaltet ist, dass er einen Erfassungsbereich der Kamera 40 im Nahbereich (begrenzt durch die Linien KSB im Schnitt von Fig. 5) vollständig abdeckt.

Fig. 5 zeigt eine Darstellung zur Erläuterung der Problematik hinsichtlich der zeitlichen Veränderung eines Bildausschnittbereichs eines sich nähernden Objektes bei der bekannten Vorrichtung zum Steuern einer Nahbereich-Ausleuchtungsvorrichtung für ein Fahrerassistenzsystem eines Kraftfahrzeuges.

In Figur 5 bezeichnet zusätzlich zu den bereits in Figur 4 eingeführten Bezugszeichen SW eine Scheinwerfereinrichtung mit einem Ausleuchtungsbereich, der von den Linien SB in diesem Schritt begrenzt wird und der in Figur 5 schraffiert gezeichnet ist. Weiterhin bezeichnet Bezugszeichen KSB die Begrenzungslinien des Erfassungsbereichs der Kamera 40. Wie aus Figur 5 entnehmbar, ist eine Ausleuchtung durch die Scheinwerfereinrichtung SW nur bis zu einer bestimmten Höhe h oberhalb der Fahrbahn vorhanden, wohingegen der von den Linien KSB begrenzte Erfassungsbereich sich zu einer größeren Höhe h' gemessen von der Fahrbahn F erstreckt. Die größere Höhe h' entspricht im Wesentlichen dem Gesichtsfeld des vorausschauenden Fahrers des Kraftfahrzeuges 20.

Weiterhin ist in Figur 5 eine Person P, zum Beispiel ein Fußgänger, in zwei verschiedenen Abständen d1 bzw. d2 vor dem Fahrzeug 20 dargestellt. Hierbei wird deutlich, dass bei nichtbetätigter Lichtquelle 30 der von der Scheinwerfereinrichtung SW beleuchtete Bildausschnitt BA1 bzw. BA2 der Person P bei größerem Abstand d2 (BA2) größer ist als bei kleinerem Abstand d1 (BA1). Während dabei der obere Totbereich TB1 bzw. TB2 gleich bleibt, tritt mit zunehmender Nähe zum Fahrzeug 20 im Nahbereich ein unterer Totbereich TB1' hinsichtlich der Ausleuchtung durch die Scheinwerfereinrichtung SW hinzu. Existiert nun keine Umgebungsbeleuchtung, wie dies beispielsweise bei Überlandfahrten der Fall ist, oder ist die Person P nicht eigenbeleuchtet, so nimmt die Sichtbarkeit der Person P im Bild mit zunehmender Nähe bzw. abnehmendem Abstand stark bis hin zur Undetektierbarkeit ab, obwohl die Person vollständig im Erfassungsbereich der Kamera 40 ist. Für sicherheitskritische Funktionen ist aber gerade der Nahbereich und damit die Zeitspanne sehr kurz vor einem Aufprall sehr wichtig.

Es stellt sich in diesem Zusammenhang das Problem, wann die Nahbereichausleuchtung durch die Lichtquelle 30 zweckmäßigerweise erfolgen sollte bzw. welche Zeitabhängigkeit sie aufweisen sollte. Eine Lösungsmöglichkeit bestünde darin, die Lichtquelle 30 kontinuierlich bzw. im Dauerpulsbetrieb zu betreiben. Jedoch bringt dies den Nachteil einer erhöhten Belastung der Lichtquelle 30 und der Kamera 40 mit sich.

Die WO 03/008232 A1 lehrt eine Umgebungsdetektionsvorrichtung, die ausgebildet ist, eine zusätzliche Beleuchtung eines Umgebungsbereichs durchzuführen, wobei mittels einer Strahlungsquelle Strahlungsimpulse zu dieser Ausleuchtung erzeugt werden, die zwischen den Intervallen der Aufnahme von Bilddaten durch eine Videokamera liegt. Dadurch wird die Bildaufnahme der Kamera nicht durch Helligkeitsänderungen beeinflusst, das menschliche Auge hingegen kann die erhöhte Strahlungsintensität (hellere Beleuchtung) wahrnehmen.

WO 03/008232 A1 offenbart ferner ein Verfahren bzw. eine Vorrichtung zur Steuerung einer Ausleuchtungsvorrichtung für ein Fahrerassistenzsystem eines Kraftfahrzeuges mit den Schritten:
Erfassen eines Objektes mittels einer Kameraeinrichtung, welches bei ausgeschalteter Ausleuchtungsvorrichtung von einer Scheinwerfereinrichtung beleuchtet wird ;
Auswertung der durch die Kamera aufgenommenen Bilddaten in einer Steuervorrichtung;
Einschalten der Ausleuchtungsvorrichtung, wenn ein Objekt auf der Fahrbahn erkannt wird;
gezielte Beleuchtung des Objektes auf der Fahrbahn durch die Ausleuchtungsvornchtung.

### VORTEILE DER ERFINDUNG

Das erfindungsgemäße Verfahren zum Steuern einer Nahbereich-Ausleuchtungsvorrichtung für ein Fahrerassistenzsystem eines Kraftfahrzeuges nach Anspruch 1 bzw. die entsprechende Vorrichtungen nach Anspruch 4 weisen den Vorteil auf, dass die Fahrer von Kraftfahrzeugen ein geringeres Unfallrisiko haben, da unabhängig von der Aufmerksamkeit des Fahrers das Fahrzeug selbst über die drohende Gefahr eines Unfalls informierbar ist und gegebenenfalls automatisch Vorsorgemaßnahmen treffen kann.

Die der vorliegenden Erfindung zugrundeliegende Idee besteht darin, eine Nahbereich-Ausleuchtungsvorrichtung situativ anzusteuern, das heißt, wenn ein Objekt detektiert wird, das sich dem Fahrzeug nähert, erst bei Erreichen eines kritischen Zeitpunktes die Nahbereich-Ausleuchtungsvorrichtung kontinuierlich oder gepulst anzusteuern, um eine weitere Verfolgung des Objekts im Nahbereich sicherzustellen. Dies schont einerseits die Nahbereich-Ausleuchtungsvorrichtung sowie die Kamera und stellt andererseits sicher, dass das Objekt in der kritischen letzten Phase vor einem möglichen Aufprall nicht verloren gehen kann, was katastrophale Folgen haben könnte.

Die in den Unteransprüchen aufgeführten Merkmale beziehen sich auf vorteilhafte Weiterbildungen und Verbesserungen des jeweiligen Gegenstandes der Erfindung.

Gemäß einer bevorzugten Weiterbildung erfolgt bei eingeschalteter Nahbereich-Ausleuchtungsvorrichtung ein dauerhaftes Ausschalten der Nahbereich-Ausleuchtungsvorrichtung, falls die ermittelte Grösse des von der Kameraeinrichtung erfassten Bildausschnitts des Objektes den vorgegebenen kritischen Wert bei kurzzeitig ausgeschalteter Nahbereich-Ausleuchtungsvorrichtung überschreitet.

Gemäß einer weiteren bevorzugten Weiterbildung wird beim Einschalten der Nahbereich-Ausleuchtungsvorrichtung eine Voraktivierung eines Sicherheitssystems und/oder Fahrerassistenzsystems durchgeführt.

### ZEICHNUNGEN

Ausfizhrungsbeispiele der Erfindung sind in der Zeichnung dargestellt und in der nachfolgenden Beschreibung näher erläutert.

Es zeigen:
Fig. 1 schematisch eine Vorrichtung zum Steuern einer Nahbereich-Ausleuchtungsvorrichtung für ein Fahrerassistenzsystem eines Kraftfahrzeuges gemäß einer Ausführungsform der vorliegenden Erfindung;
Fig. 2 ein Beispiel für die zeitliche Veränderung eines Bildausschnittbereichs eines sich nähernden Objektes ohne Zuschaltung der Nahbereich-Ausleuchtungsvorrichtung zur Anwendung bei der Ausführungsform der vorliegenden Erfindung;
Fig. 3 die wesentlichen Verfahrensschritte eines Verfahrens zum Steuern einer Nahbereich-Ausleuchtungsvorrichtung für ein Fahrerassistenzsystem eines Kraftfahrzeuges gemäß der Ausführungsform der vorliegenden Erfindung;
Fig. 4 schematisch eine aus der WO 2004/013654 A1 bekannte Vorrichtung zum Steuern einer Nahbereich-Ausleuchtungsvorrichtung für ein Fahrerassistenzsystem eines Kraftfahrzeuges;
Fig. 5 eine Darstellung zur Erläuterung der Problematik hinsichtlich der zeitlichen Veränderung eines Bildausschnittbereichs eines sich nähernden Objektes bei der bekannten Vorrichtung zum Steuern einer Nahbereich-Ausleuchtungsvorrichtung für ein Fahrerassistenzsystem eines Kraftfahrzeuges.

### BESCHREIBUNG VON AUSFÜHRUNGSBEISPIELEN

In den Figuren bezeichnen gleiche Bezugszeichen gleiche oder funktionsgleiche Komponenten.

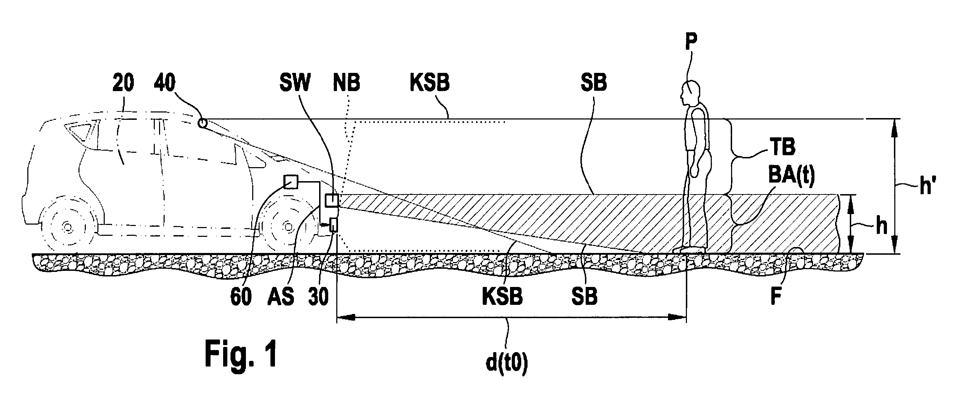

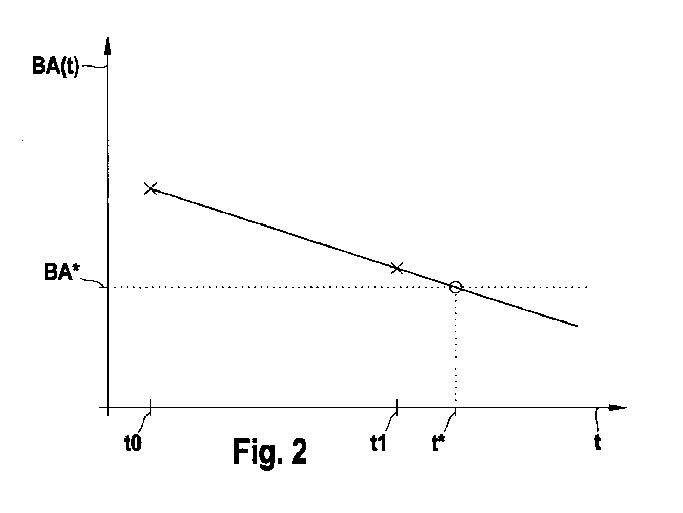

Fig. 1 zeigt schematisch eine Vorrichtung zum Steuern einer Nahbereich-Ausleuchtungsvorrichtung für ein Fahrerassistenzsystem eines Kraftfahrzeuges gemäß einer Ausführungsform der vorliegenden Erfindung, und Fig. 2 zeigt ein Beispiel für die zeitliche Veränderung eines Bildausschnittbereichs eines sich nähernden Objektes ohne Zuschaltung der Nahbereich-Ausleuchtungsvorrichtung zur Anwendung bei der Ausführungsform der vorliegenden Erfindung.

Das Ausführungsbeispiel knüpft an den Stand der Technik an, der oben mit Bezug auf Fig. 4 und 5 erläutert wurde.

Bei der in Figur 1 gezeigten Ausführungsform wird bei einem Abstand d (t0) zum Zeitpunkt t0 eine Person P im Erfassungsbereich der Kamera 40 erfasst, als Fußgänger identifiziert und die Grösse des Bildausschnitts BA (t) zum Zeitpunkt t0 erfasst. Die Steuereinrichtung 60 ist derart gestaltet, dass sie eine Veränderung der Größe des Bildausschnittes BA (t) der Person P im Lichte der Scheinwerfereinrichtung SW kontiniuierlich erfassen kann und somit erfassen kann, ob sich die betreffende Person P kontinuierlich dem Fahrzeug 20 nähert.

Dabei nimmt die Größe des Bildausschnitts BA(t) bei Annäherung an das Fahrzeug 20 stetig mit der Zeit t ab, wie in Figur 2 dargestellt. Zum Zeitpunkt t=t^{*} erreicht die Größe des Bildausschnittes BA von (t) einen kritischen Wert BA^{*}, woraufhin die Steuereinrichtung 60 ein Aktivierungssignal AS an die Nahbereich-Ausleuchtungsvorrichtung 30 sendet und diese in Abhängigkeit von der Größe des Bildausschnitts BA(t), d.h. Erreichen des kritischen Wertes BA^{*}, aktiviert. Dadurch vergrößert sich der von der Kamera 40 erfassbare Bildausschnitt sprungartig auf den gesamten Erfassungsbereich der Kamera 40, das heißt auf die in Figur 1 eingezeichnete Höhe h'. Deshalb ist somit ein genaues Verfolgen des Annäherns der Person P im kritischen Nahbereich mit einem entsprechend großen Bildausschnitt möglich.

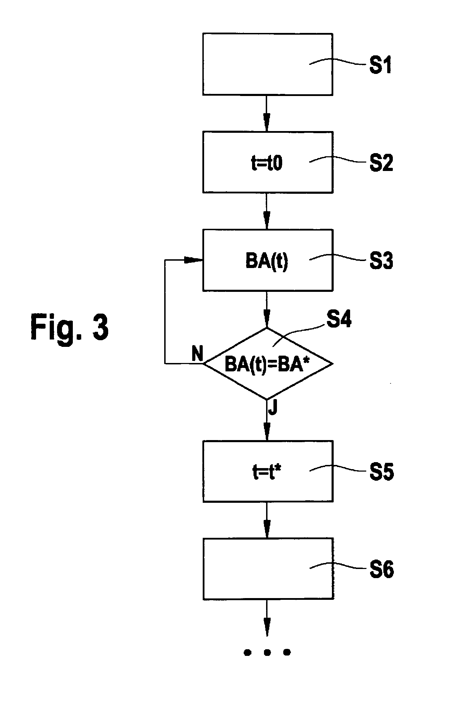

Fig. 3 zeigt die wesentlichen Verfahrensschritte eines Verfahrens zum Steuern einer Nahbereich-Ausleuchtungsvorrichtung für ein Fahrerassistenzsystem eines Kraftfahrzeuges gemäß der Ausführungsform der vorliegenden Erfindung.

Gemäß Figur 3 wird in Schritt S1 das Verfahren zum Steuern der Nahbereich-Ausleuchtungsvorrichtung für ein Fahrerassistenzsystem eines Kraftfahrzeuges gestartet. Zum Zeitpunkt t=t0 wird in Schritt S2 die Person P erfasst und als Fußgänger identifiziert. Anschließend wird in Schritt S3 die Größe des Bildausschnitts BA(t) zum Zeitpunkt t0 bestimmt. Ist die Größe des Bildausschnitts BA(t) größer als der kritische Wert BA^{*}, wie in Schritt S4 ermittelt, kehrt das Programm zurück zu Schritt S3 und ermittelt wiederum die Größe des Bildausschnitts. Dies findet solange statt, bis die Größe des Bildausschnitts BA(t) kleiner oder gleich der kritischen Größe des Bildausschnitts BA^{*} ist. Diese Bedingung ist zum Zeitpunkt t=t^{*} erfüllt (vgl. Figur 2).

Ansprechend darauf wird in Schritt S6 von der Steuereinrichtung 60 die Nahbereich-Ausrichtungsvorrichtung in Form der Lichtquelle 30 aktiviert. Weiterhin können Vorkehrungen für Sicherungsmaßnahmen getroffen werden, beispielsweise Aktivieren der Gurtstraffer, Voraktivieren einer Fußgänger-Aufprall-Schutzvorrichtung, Voraktivieren einer Notbrems-Vorrichtung.

Sollte die erfasste Person P wieder aus dem Erfassungsbereich der Kamera 40 verschwinden bzw. der Abstand derart zunehmen, dass der kritische Wert BA^{*} überschritten wird, wird die Nahbereich-Ausleuchtungsvorrichtung 30 wieder deaktiviert, bis ein erneutes Ereignis wie dasjenige zum Zeitpunkt t0, also Erfassen eines erneuten Objektes bzw. einer neuen Person oder ein weiderholtes Annähern derselben Person, auftritt. Zur Überprüfung, ob ein solches Deaktivieren angebracht ist, kann die Nahbereich-Ausleuchtungsvorrichtung 30 kurzzeitig (impulsartig) deaktiviert werden. Sollte es sich dabei herausstellen, dass ein Deaktivieren unangebracht ist, da der kritische Wert BA^{*} unterschritten wird, kann der Betrieb fortfahren.

Als Nahbereich-Ausleuchtungsvorrichtung 30 eignen sich LED in besonderem Maße, da LED klein und leuchtstark sind. Im beschriebenen Ausführungsbeispiel sind die LED in den Scheinwerfern integriert. Sie sind im oberen Bereich der Scheinwerfer angeordnet, wobei die Abstrahlrichtung der LED nach oben zeigt. In einer Variante sind die LED alternativ oder zusätzlich im Randbereich der Windschutzscheibe angebracht. Alternativ oder zusätzlich sind die LED in den Spritzwasserdüsen auf der Motorhaube mit Blickrichtung nach vorne oben angeordnet. Zur Erreichung einer entsprechenden Abstrahlcharakteristik sind die LED mit einer Optik kombiniert.

Die beschriebene Ausführungsform hat den wesentlichen Vorteil, dass die Nahbereich-Ausleuchtungsvorrichtung 30 energiesparend und schonend betrieben werden kann, also kein kontinuierlicher Betrieb bzw. Dauerpulsbetrieb stattfinden muss.

Obwohl die vorliegende Erfindung vorstehend anhand eines bevorzugten Ausführungsbeispiels erläutert worden ist, ist sie nicht darauf beschränkt, sondern auch in anderer Weise ausführbar.

## Patentansprüche

1. Verfahren zum Steuern einer Nahbereich-Ausleuchtungsvorrichtung für ein Fahrerassistenzsystem eines Kraftfahrzeuges mit den Schritten:
Erfassen eines Objektes (P) mittels einer Kameraeinrichtung (40), welches bei ausgeschalteter Nahbereich-Ausleuchtungsvorrichtung (30) von einer Scheinwerfereinrichtung (SW) beleuchtet wird;
Ermitteln einer Grösse eines von der Kameraeinrichtung (40) erfassten Bildausschnitts (BA(t)) des Objektes (P);
Vergleichen der ermittelten Grösse des von der Kameraeinrichtung (40) erfassten Bildausschnitts (BA(t)) des Objektes (P) mit einem vorgegebenen kritischen Wert (BA*); und
Einschalten der Nahbereich-Ausleuchtungsvorrichtung (30), falls die ermittelte Grösse des von der Kameraeinrichtung (40) erfassten Bildausschnitts (BA(t)) des Objektes (P) den vorgegebenen kritischen Wert (BA*) unterschreitet.

2. Verfahren nach Anspruch 1, **dadurch gekennzeichnet, dass** bei eingeschalteter Nahbereich-Ausleuchtungsvorrichtung (30) ein dauerhaftes Ausschalten der Nahbereich-Ausleuchtungsvorrichtung (30) erfolgt, falls die ermittelte Grösse des von der Kameraeinrichtung (40) erfassten Bildausschnitts (BA(t)) des Objektes (P) den vorgegebenen kritischen Wert (BA*) bei kurzzeitig ausgeschalteter Nahbereich-Ausleuchtungsvorrichtung (30) überschreitet.

3. Verfahren nach Anspruch 1 oder 2, **dadurch gekennzeichnet, dass** beim Einschalten der Nahbereich-Ausleuchtungsvorrichtung (30) eine Voraktivierung eines Sicherheitssystems und/oder Fahrerassistenzsystems durchgeführt wird.

4. Vorrichtung zum Steuern einer Nahbereich-Ausleuchtungsvorrichtung für ein Fahrerassistenzsystem eines Kraftfahrzeuges mit:
einer Kameraeinrichtung (40) zum Erfassen eines Objektes (P), welches bei ausgeschalteter Nahbereich-Ausleuchtungsvorrichtung (30) von einer Scheinwerfereinrichtung (SW) beleuchtet wird; und
einer Steuervorrichtung (60), die eine Größe eines von der Kameraeinrichtung (40) erfassten Bildausschnitts (BA(t)) des Objekts (P) ermittelt, die ermittelte Größe des von der Kameraeinrichtung (40) erfassten Bildausschnitts (BA(t)) des Objektes (P) mit einem vorgegebenen kritischen Wert (BA*) vergleicht und die Nahbereich-Ausleuchtungsvorrichtung (30) einschaltet, falls die ermittelte Grösse des von der Kameraeinrichtung (40) erfassten Bildausschnitts (BA(t)) des Objektes (P) den vorgegebenen kritischen Wert (BA*) unterschreitet.

5. Vorrichtung nach Anspruch 4, **dadurch gekennzeichnet, dass** die Steuervorrichtung (60) derart gestaltet ist, dass bei eingeschalteter Nahbereich-Ausleuchtungsvorrichtung (30) ein dauerhaftes Ausschalten der Nahbereich-Ausleuchtungsvorrichtung (30) erfolgt, falls die ermittelte Grösse des von der Kameraeinrichtung (40) erfassten Bildausschnitts (BA(t)) des Objektes (P) den vorgegebenen kritischen Wert (BA*) bei kurzzeitig ausgeschalteter Nahbereich-Ausleuchtungsvorrichtung (30) überschreitet.

6. Vorrichtung nach Anspruch 4 oder 5, **dadurch gekennzeichnet, dass** die Steuervorrichtung (60) derart gestaltet ist, dass beim Einschalten der Nahbereich-Ausleuchtungsvorrichtung (30) eine Voraktivierung eines Sicherheitssystems und/oder Fahrerassistenzsystems durchgeführt wird.

7. Vorrichtung nach Anspruch 4, 5 oder 6, **dadurch gekennzeichnet, dass** die Nahbereich-Ausleuchtungsvorrichtung (30) in die Scheinwerfereinrichtung (SW) integriert ist.

## Claims

1. Method for controlling a close up lighting device for a driver assistance system of a motor vehicle, having the steps:
detection, by means of a camera device (40), of an object (P) which is illuminated by a headlight device (SW) when the close up lighting device (30) is switched off;
determination of a size of an image detail (BA(t)), detected by the camera device (40), of the object (P);
comparison of the determined size of the image detail (BA(t)), detected by the camera device (40), of the object (P) with a predefined critical value (BA*); and
switching on of the close up lighting device (30) if the determined size of the image detail (BA(t)), detected by the camera device (40), of the object (P) undershoots the predefined critical value (BA*).

2. Method according to Claim 1, **characterized in that**, when the close up lighting device (30) is switched on, the close up lighting device (30) is continuously switched off if the determined size of the image detail (Ba(t)), detected by the camera device (40), of the object (P) exceeds the predefined critical value (Ba*) when the close up lighting device (30) is briefly switched off.

3. Method according to Claim 1 or 2, **characterized in that** when the close up lighting device (30) is switched on, pre-activation of a safety system and/or driver assistance system is carried out.

4. Device for controlling a close up lighting device for a driver assistance system of a motor vehicle, having:
a camera device (40) for detecting an object (P) which is illuminated by a headlight device (SW) when the close up lighting device (30) is switched off; and
a control device (60) which determines a size of an image detail (BA(t)), detected by the camera device (40), of the object (P), compares the determined size of the image detail (BA(t)), detected by the camera device (40), of the object (P) with a predefined critical value (BA*), and switches on the close up lighting device (30) if the determined size of the image detail (BA(t)), detected by the camera device (40), of the object (P) undershoots the predefined critical value (BA*).

5. Device according to Claim 4, **characterized in that** the control device (60) is configured in such a way that when the close up lighting device (30) is switched on, the close-up lighting device (30) is continuously switched off if the determined size of the image detail (BA(t)), detected by the camera device (40), of the object (P) exceeds the predefined critical value (BA*) when the close up lighting device (30) is briefly switched off.

6. Device according to Claim 4 or 5, **characterized in that** the control device (60) is configured in such a way that when the close up lighting device (30) is switched on, pre-activation of a safety system and/or driver assistance system is carried out.

7. Device according to Claim 4, 5, or 6, **characterized in that** the close up lighting device (30) is integrated into the headlight device (SW).

## Revendications

1. Procédé de commande d'un ensemble d'éclairage de proximité pour système d'assistance au conducteur d'un véhicule automobile, le procédé présentant les étapes qui consistent à :
détecter au moyen d'un dispositif de caméra (40) un objet (P) qui est éclairé par un dispositif de phare (SW) lorsque l'ensemble (30) d'éclairage de proximité est débranché,
déterminer la taille d'une partie (BA(t)) de l'image de l'objet (P) détecté par le dispositif de caméra (40),
comparer la taille ainsi déterminée de la partie (BA(t)) de l'image de l'objet (P) saisie par le dispositif de caméra (40) à une valeur critique prédéterminée (BA*) et
brancher l'ensemble (30) d'éclairage de proximité si la taille ainsi déterminée de la partie (BA(t)) de l'image de l'objet (P) saisie par le dispositif de caméra (40) n'atteint pas la valeur critique prédéterminée (BA*).

2. Procédé selon la revendication 1, **caractérisé en ce que** lorsque l'ensemble (30) d'éclairage de proximité est branché, l'ensemble (30) d'éclairage de proximité est débranché durablement si la taille déterminée pour la partie (BA(t)) de l'objet (P) de l'image saisie par le dispositif de caméra (40) dépasse la valeur critique prédéterminée (BA*) lorsque l'ensemble (30) d'éclairage de proximité a été débranché brièvement.

3. Procédé selon la revendication 1 ou 2, **caractérisé en ce que** lorsque l'ensemble (30) d'éclairage de proximité a été branché, le système de sécurité et/ou le système d'assistance au conducteur sont pré-activés.

4. Ensemble de commande d'un ensemble d'éclairage de proximité pour système d'assistance au conducteur d'un véhicule automobile, l'ensemble comprenant :
un dispositif de caméra (40) qui détecte un objet (P) qui est éclairé par un dispositif de phare (SW) lorsque l'ensemble (30) d'éclairage de proximité est débranché, et
un ensemble de commande (60) qui détermine la taille d'une partie (BA(t)) de l'image de l'objet (P) saisie par le dispositif de caméra (40), qui compare la taille ainsi déterminée de la partie (BA(t)) de l'image de l'objet (P) saisie par le dispositif de caméra (40) à une valeur critique prédéterminée (BA*) et qui branche l'ensemble (30) d'éclairage de proximité si la taille ainsi déterminée de la partie (BA(t)) de l'image de l'objet (P) saisie par le dispositif de caméra (40) n'atteint pas la valeur critique prédéterminée (BA*).

5. Ensemble selon la revendication 4, **caractérisé en ce que** l'ensemble de commande (60) est conçu de telle sorte que lorsque l'ensemble (30) d'éclairage de proximité est branché ait lieu un débranchement durable de l'ensemble (30) d'éclairage de proximité si la taille déterminée de la partie (BA(t)) de l'image de l'objet (P) saisie par le dispositif de caméra (40) dépasse la valeur critique prédéterminée (BA*) lorsque l'ensemble (30) d'éclairage de proximité est débranché brièvement.

6. Ensemble selon la revendication 4 ou 5, **caractérisé en ce que** l'ensemble de commande (60) est conçu de telle sorte que lorsque l'ensemble (30) d'éclairage de proximité est branché, un système de sécurité et/ou un système d'assistance au conducteur sont pré-activés.

7. Ensemble selon la revendication 4, 5 ou 6, **caractérisé en ce que** l'ensemble (30) d'éclairage de proximité est intégré dans le dispositif de phare (SW).
